# EUROPEAN PATENT SPECIFICATION

(11) **EP 2 445 635 B1**
(45) Date of publication and mention of the grant of the patent: **06.09.2017**
(21) Application number: 10792426.8
(22) Date of filing: 22.06.2010
(51) Int. Cl.: B01J 37/02, B01J 21/06, B01J 21/18, B01J 23/00, B01J 27/20, B01J 33/00, B01J 37/08, C02F 1/30, C02F 1/32, B01J 32/00

(54) **METHOD FOR THE PREPARATION DOPED CATALYTIC CARBONACEOUS COMPOSITE MATERIALS**
VERFAHREN ZUR HERSTELLUNG VON DOTIERTE KATALYTISCHEN KOHLENSTOFFVERBUNDMATERIALIEN
METHODE POUR LA PRODUCTION DE MATIÈRES COMPOSITES CARBONÉES CATALYTIQUES DOPÉS

(30) Priority: 22.06.2009 US 219066 P
(43) Date of publication of application: 02.05.2012
(73) Proprietor: Nanyang Technological University, Singapore 639798 (SG)
(72) Inventor: LIM, Teik Thye, Singapore 639798 (SG); YAP, Pow Seng, Singapore 639798 (SG); SRINIVASAN, Madhavi, Singapore 639798 (SG); FANE, Anthony Gordon, Singapore 639798 (SG)
(74) Representative: Viering, Jentschura & Partner mbB Patent- und Rechtsanwälte
(86) International application number: PCT/SG2010/000233
(87) International publication number: WO 2010/151231

(56) References cited:
- CN-A- 101 108 304
- CN-A- 101 537 355
- US-A1- 2005 215 068
- US-A1- 2007 119 762
- US-A1- 2008 206 125
- US-B2- 7 256 147
- US-B2- 7 541 509
- SHOUXIN LIU ET AL.: "PREPARATION AND CHARACTERIZATION OF A NOVEL ACTIVATED CARBON-SUPPORTED N-DOPED VISIBLE LIGHT RESPONSE PHOTOCATALYST (Tio2-x Ny/AC)", JOURNAL OF CHEMICAL TECHNOLOGY AND BIOTECHNOLOGY, vol. 82, 20 April 2007 (2007-04-20), pages 453-459, XP002685991,
- ELENA SERRANO ET AL.: "NANOTECHNOLOGY FOR SUSTAINABLE ENERGY", RENEWABLE AND SUSTAINABLE ENERGY REVIEWS, vol. 13, 10 June 2009 (2009-06-10), pages 2373-2384, XP002685992,
- BASHIR AHMMAD ET AL.: "CARBON NANOTUBES SYNERGISTICALLY ENHANCE PHOTOCATALYTIC ACTIVITY OF TiO2", CATALYSIS COMMUNICATIONS, vol. 9, 25 January 2008 (2008-01-25), pages 1410-1413, XP002685993,
- WENDONG WANG ET AL.: "VISIBLE LIGHT PHOTODEGRADATION OF PHENOL ON MWNT-TiO2 COMPOSITE CATALYST PREPARED BY A MODIFIED SOL-GEL METHOD", JOURNAL OF MOLECULAR CATALYSIS A: CHEMICAL, vol. 235, 12 May 2005 (2005-05-12), pages 194-199, XP002685994,
- ADRIANA ZALESKA: "DOPED-TiO2", RECENT PATENTS ON ENGINEERING, vol. 2, 17 June 2008 (2008-06-17), pages 157-164, XP002685995,
- JEONG JIN YANG ET AL.: "ELECTROCHEMICAL BEHAVIOR OF LITHIUM TITANIUM OXIDE / ACTIVATED CARBON COMPOSITE FOR ELECTROCHEMICAL CAPACITOR", JOURNAL OF ELECTROCHEMICAL SCIENCE AND TECHNOLOGY, vol. 1, 23 August 2010 (2010-08-23), pages 63-68, XP002685996,

## Description

### FIELD OF THE INVENTION

The present invention is directed to the field of catalysis, in particular heterogeneous photocatalysis of pollutants.

### BACKGROUND OF THE INVENTION

Among various advanced oxidation processes (AOPs), heterogeneous catalysis, such as photocatalysis appears to be an appealing option for water and wastewater treatment, because it (i) does not require the usage of toxic, hazardous, and expensive chemicals, (ii) allows the destruction of a myriad of organic aqueous pollutants including recalcitrant compounds, and (iii) is more energy efficient compared to sonolysis and photolysis.
Shouxin Liu et al. (J. Chem. Techn. Biotechn. (2007), Vol. 82, pages 453-459) describe the preparation and characterization of a novel activated carbon-supported N-doped visible light response photocatalyst (TiO₂₋ₓN_{y}/AC), the preparation method using hydrolysis of TiCl₄ and a single calcination step at 500°C in an NH₃/N₂ atmosphere.
Wendong Wang et al. (J. Mol. Cat. A: Chemical 235 (2005), pages 194-199) describe the visible light degradation of phenol on MWNT-TiO₂ composite catalysts prepared by a modified sol-gel method, wherein a single calcination step at 400°C under nitrogen atmosphere is used.

There is still need in the art for alternative and improved photocatalysts and methods for their production. It is therefore an object of the present invention to provide new catalytic materials which can be used in advanced oxidation processes (AOPs).

### SUMMARY OF THE INVENTION

The subject-matter of the present invention is defined in independent claim 1. Further embodiments thereof are defined in dependent claims 2-9. In a first aspect the present invention refers to a sol-gel method for preparing a composite material of activated carbon comprising TiO₂ doped with nitrogen as a photocatalytic material according to the appended claims. The method comprises mixing a hydrolyzed solution comprising titanium alkoxide with activated carbon to obtain a sol. The sol is afterwards incubated while at the same time it is mixed. After incubation the sol is condensated by heating to form a gel and obtain a gel-coated composite. After condensation the gel-coated composite formed is subjected to a first calcination carried out at a temperature between 400 °C to ≤ 500 °C for between 2 hours to 6 hours in an oxidizing environment, wherein the oxidizing environment is an oxygen comprising environment followed by a second calcination carried out at a temperature between > 500 °C to 700 °C for between 2 hours to 6 hours in a non-oxidizing environment, wherein the non-oxidizing environment comprises a second dopant comprising precursor material, and wherein the non-oxidizing environment is a nitrogen atmosphere or argon atmosphere. Also, a solution of a first dopant comprising precursor material is added to the solution comprising the titanium alkoxide (1) before hydrolyzation, or a first dopant comprising precursor material is added to the sol (2) after hydrolyzation and before condensation or to the gel-coated composite (3) between condensation and subjecting the gel-coated composite to calcination. The first and second dopant are nitrogen and the first and second dopant comprising precursor materials are selected from the group consisting of NH₃, urea, NH₄OH, ammonium thiocyanate, hydrazine and amines.

Also described herein is a method of removing pollutants comprised in a liquid stream by subjecting the liquid stream to a composite material described herein.

Also described herein is a photocatalytic oxidation reactor comprising a composite material including a-doped photocatalytic material.

### BRIEF DESCRIPTION OF THE DRAWINGS

The invention will be better understood with reference to the detailed description when considered in conjunction with the non-limiting examples and the accompanying drawings, in which:

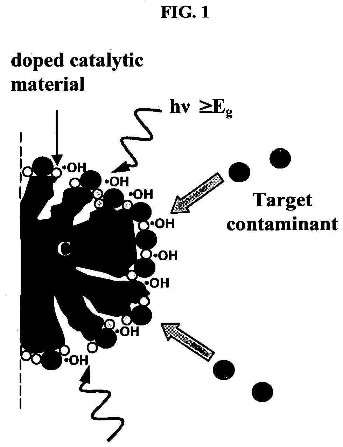

**Fig. 1** illustrates the working principle of synergistic adsorption-catalytic degradation for a composite material described herein. The carbonaceous material (C) serves to concentrate the target contaminants around the surface of the doped catalytic material for enhanced catalytic degradation efficiency.

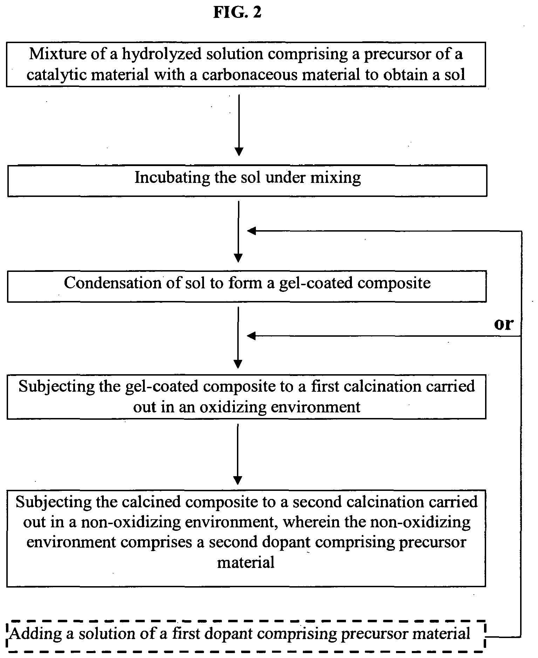

**Fig. 2** is a flow chart illustrating the method used to obtain the composite material referred to herein.

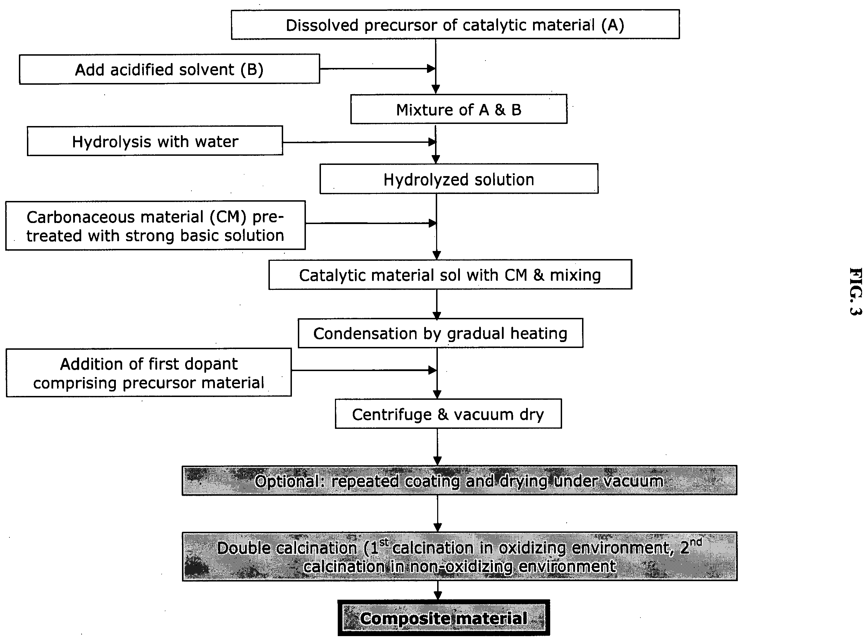

**Fig. 3** is another flow chart illustrating a more specific embodiment of the method used to obtain the composite material referred to herein.

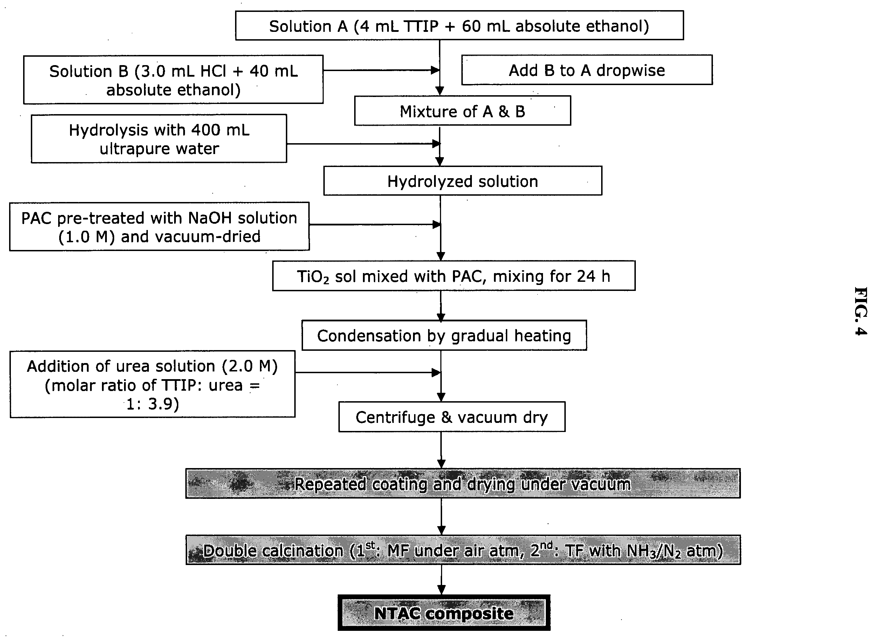

**Fig. 4** is a flow chart illustrating a specific example for the manufacture of a composite material as described also in the experimental section. MF means muffle furnace & TF means tube furnace.
**Fig. 5** (A) shows XRD patterns for AC, TiO₂, N-TiO₂ and N-TiO₂/AC (also referred to as NTAC) *(Note:* A and B denote anatase and brookite phases, respectively). Figure 5 (B) depicts another measurement of X-ray diffraction (XRD) patterns of NTAC, N-doped TiO₂, TiO₂ and AC. The composite was found to comprise predominantly anatase phase. For the composite having 30 wt.% N-doped TiO₂, the crystallite size was about 5.0 nm.
**Fig. 6** shows nitrogen adsorption-desorption isotherm analysis for N-TiO₂/AC (*Inset:* The corresponding pore size distribution for the composite material).
**Fig. 7** shows XPS spectra depicting binding energy of N1s for N-TiO₂ and N-TiO₂/AC.
**Fig. 8** shows UV-vis absorbance spectra for P25 and as-synthesized titania.
**Fig. 9** shows TEM image depicting the anchorage of N-TiO₂ on the surface of AC (Inset: (a) SAED pattern for N-TiO₂ crystals and (b) SAED pattern for AC).
**Fig. 10** Adsorption isotherm of BPA on virgin AC and N-TiO₂/AC at different pH levels (Note: Symbols o, •, □, ■, Δ, A denote experimental data; continuous curves are best-fitted based on Langmuir isotherm model).
**Fig**. **11** shows effect of pH on the photocatalytic degradation efficiency for bisphenol-A (BPA) under simulated solar irradiation (Note: Co denotes the equilibrium concentration of BPA after adsorption in the dark).
**Fig. 12** (a) shows the effect of excitation wavelengths on the photocatalytic degradation efficiency for BPA (Note: Co denotes the equilibrium concentration of BPA after adsorption in the dark) and (b) comparison of BPA removal performance under various excitation wavelengths for N-TiO₂/AC, TiO₂ N-TiO₂ and P25.
**Fig. 13** shows the SEM-elemental mapping results with EDX for one of the NTAC synthesized via repetitive coatings, followed by a two-stage calcination. It is evident that this synthesis method resulted in a large fraction of the AC surface being uniformly covered with N-doped TiO₂ nanoparticles. Further examination using EDX confirmed that the deposited particles were N-doped TiO₂.

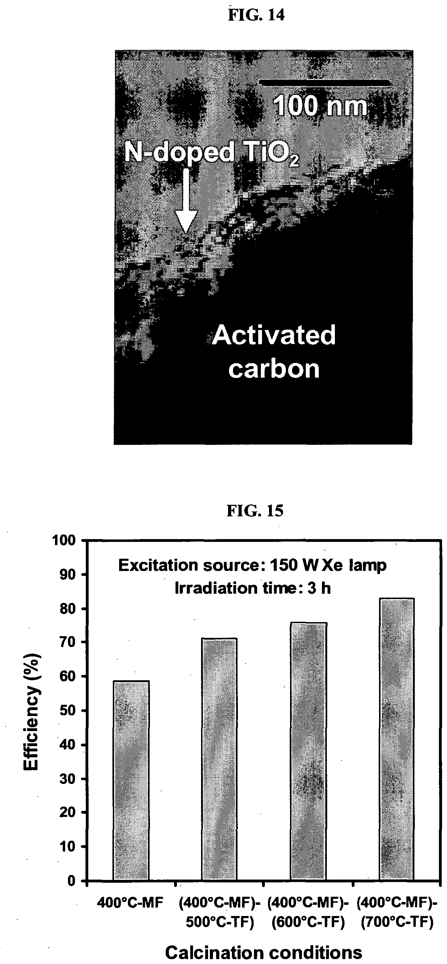

**Fig. 14** depicts the TEM image for the NTAC (11 wt% of N-doped TiO₂). The N-doped TriO₂ nanocrystals were observed to anchor reasonably well onto AC, and forming deposits on the surface of AC. The difference in the morphologies of the crystalline N-doped TriO₂ and the amorphous structure of AC is evident in the image. Further examination using elemental mapping and EDX confirmed that the deposited particles were N-doped TriO₂ (results not shown).
**Fig. 15** depicts the improvement in the photocatalytic degradation of BPA, by employing NTAC composites synthesized with tailored calcination conditions. The enhanced efficiencies are attributed to improved crystallinity of the titania. Importantly, the AC support for N-doped TriO₂ could still be well preserved even at calcination at high temperatures (e.g. more than 500°C).

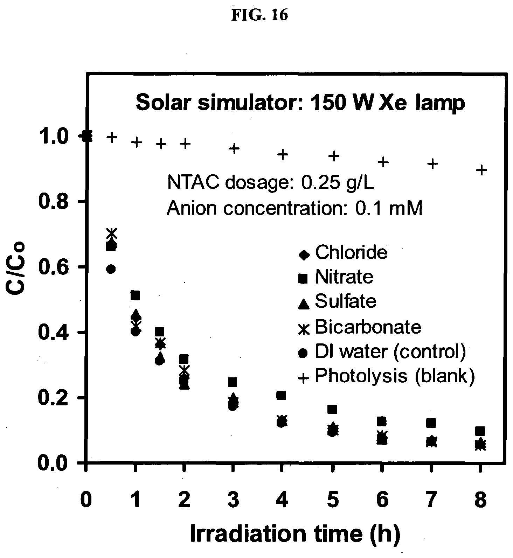

**Fig. 16** shows the effect of various anions in governing the photocatalytic performance of NTAC for the removal of BPA. In general, the NTAC composite exhibited satisfactory photodegradation efficiency under the influences of most of the investigated anions (at 0.1 mM anion concentrations).

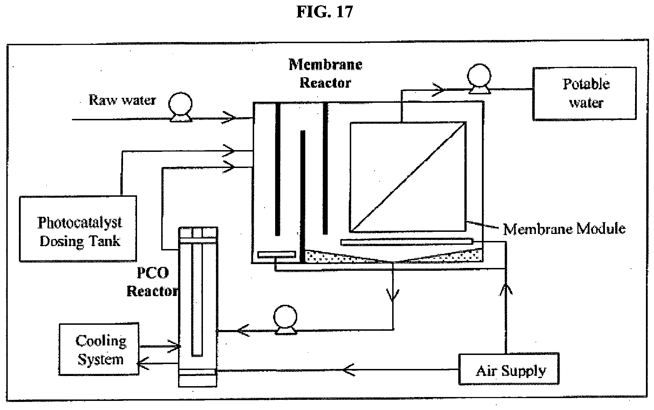

**Fig. 17** shows an exemplary set up of a reactor system which can use a composite material including a photocatalytic material, such as TiO₂ described herein. Raw water is introduced into the membrane reactor tank through a valve. Within the membrane reactor tank the raw water is mixed with fresh composite material and recycled composite material from the photocatalytic oxidation (PCO) reactor. Within the reactor tank the raw water and the composite material are mixed by the turbulence flow created by coarse diffuser located at the bottom of the membrane reactor. As can be seen in Figure 17 the coarse diffusers are connected to an air supply which is also connected to the PCO reactor. After cleaning the wastewater is passed through the pores of the filtration membrane by suction force generated by a pump located outside the membrane reactor. The composite material settles to the bottom of the membrane reactor once the coarse diffuser stops working. From the bottom of the membrane reactor they are transferred via a pump into the PCO reactor. The PCO reactor consists of a reaction chamber and a UV lamp. The PCO chamber can comprise of a double glass-cooling jacket. The PCO reactor can be fitted with a gas diffuser at the bottom of the PCO chamber for diffusing air if necessary. A light source is installed vertically in the middle of the reactor as light source for regeneration of composite material including a photocatalytic material.

### DETAILED DESCRIPTION OF THE PRESENT INVENTION

In a first aspect the present invention refers to a sol-gel method for preparing a composite material of activated carbon comprising TiO₂ doped with nitrogen as a photocatalytic material according to the appended claims. The addition of the first dopant comprising precursor material carried out after the sol had been sufficiently hydrolyzed may present improved doping following less "shielding" effect of the large alkyl groups (e.g. -CH₃).

Also, the composite material obtained by this process preserves the composite structure of the doped TiO₂ catalyst supported on activated carbon which is well-preserved even under high temperature and remains functional as adsorbent in the composite material. The composite material can be used for example in continuous flow-through treatment system operating under repeating day-night cycle of alternating solar photocatalysis and adsorption processes.

The manufacture of the composite material is based on a sol-gel method or process. In general, the sol-gel process is based on the phase transformation of a sol obtained from metallic alkoxides or organometallic precursors. This sol, which is a solution containing particles in suspension, is polymerized at low temperature to form a wet gel. The wet gel is going to be densified through a thermal annealing to give an inorganic product like a glass, polycrystals or a dry gel. In general, the sol-gel process consists of hydrolysis and condensation reactions, which lead to the formation of a gel or a gel-coated composite.

A "sol" is defined as a dispersion of solid particles in a liquid where only the Brownian motions suspend the particles. A "gel" is a state where both liquid and solid are dispersed in each other, which presents a solid network containing liquid components. In the context of the present invention the solid particles are made of the catalytic material formed from a corresponding precursor material, i.e. TiO₂ formed from titanium alkoxides.

The catalytic material is a photocatalyst (or photocatalytic material), namely TiO₂. Photocatalysts can be used for photocatalytic reactions for example to remove pollutants from wastewater. Active photocatalyst materials can be semiconducting oxide materials which are in close contact with a liquid or gaseous reaction medium. Further examples for such photocatalytic materials include, but are not limited to ZnO, ZrO, CdS, MoS₂, Fe₂O₃ SnO₂, ZnS, W₂O₃, V₂O₅ and SrTiO₃. It is also possible to use heterogeneous systems of different photocatalysts together, i.e. mixtures of the aforementioned photocatalysts. It is also possible to add co-catalysts, such as NiO, which are loaded on particulate photocatalytic material.

These photocatalytic materials can act as sensitizers for light-reduced redox processes due to their electronic structure, which is characterized by a filled valence band and an empty conduction band. When a photon with an energy of *hv* matches or exceeds the bandgap energy, Eg of the semiconducting photocatalyst, an electron, e_{cb}⁻, is promoted from the valence band, VB, into the conduction band, CB, leaving a hole, h_{vb}⁺ behind. Excited state conduction-band electrons and valence-band holes can recombine and dissipate the input energy as heat, get trapped in metastable surface states of the photocatalytic material, or react with electron donors and electron acceptors adsorbed on the surface or within the surrounding electrical double layer of the charged photocatalytic material.

Thus, the photocatalytic materials referred to herein can serve for the remediation of contaminants, such as alkanes, aliphatic alcohols, aliphatic carboxylic acids, alkenes, phenols, aromatic carboxylic acids, dyes, polychlorinated biphenyls (PCBs), simple aromatics, halogenated alkanes and alkenes, surfactants, and pesticides as well as for the reductive deposition of heavy metals (e.g., Pt⁴⁺, Au³⁺, Rh³⁺, Cr(VI)) from aqueous solution to surfaces. In many cases, complete mineralization of organic compounds has been reported when using these photocatalysts. In one example, a photocatalytic material, such as TiO₂ has been used to remove bisphenol-A (BPA) from a liquid.

In the method of the present invention those photocatalytic materials are formed in particulate form in the sol-gel method starting with a precursor of a catalytic material, such as a photocatalyst precursor material. For sol gel-methods precursor materials that are used for the catalytic materials referred to herein, i.e. particulate TiO₂ as photocatalytic material, a titanium alkoxide is used. The hydrolysis of a titanium alkoxide is thought to induce the substitution of OR groups linked to titanium by Ti-OH groups, which then lead to the formation of a titanium network via condensation polymerisation. Examples of titanium alkoxides can include, but are not limited to titanium methoxide, titanium ethoxide, titanium tetraisopropoxide and titanium butoxide.

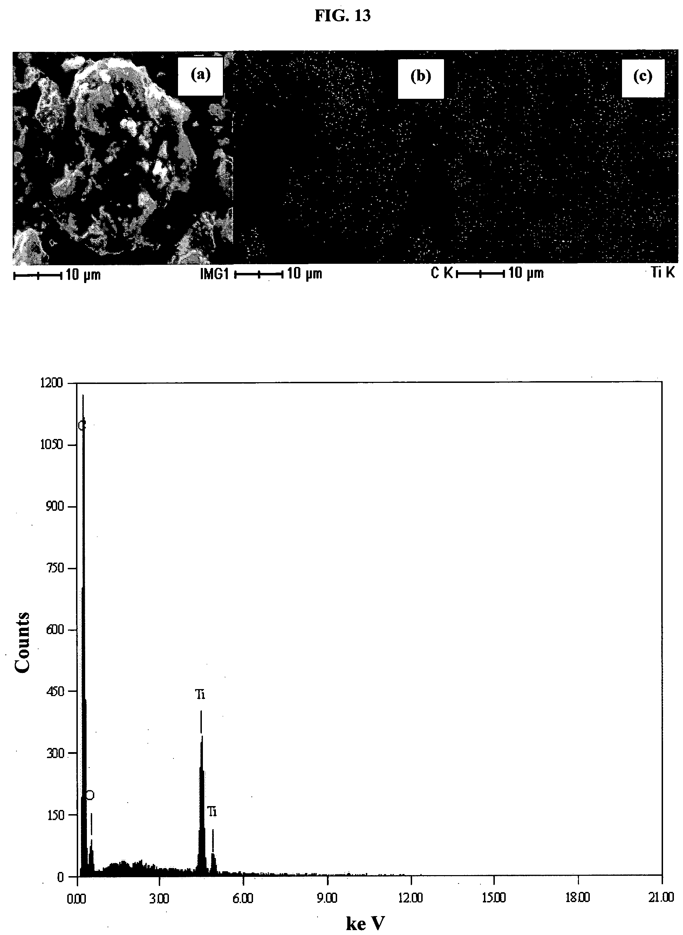

In a sol-gel method hydrolysis and condensation of the precursor material leads to the formation of a particulate metallic particle wherein the metallic particle is made of the catalytic, i.e. photocatalytic, material. In one embodiment the size of the particle is in the nanometer range, i.e. nanoparticle. It is also possible to obtain a carbonaceous material which is covered with a thin film. The thin film could be formed by a reasonably dense layer of nanoparticles immobilized at the surface of the carbonaceous material. Such an almost dense layer of film can be obtained by repeated coating of the carbonaceous material. In general, the method described herein can lead to a substantially homogeneous distribution of the particulate material at the surface of the carbonaceous material instead of an agglomeration of particles (see e.g. Figure 13).

Typically, but not limited thereto, sol preparation by hydrolysis and condensation of a catalytic precursor material can be performed in an alcohol or an absolute alcohol. Any alcohol can be used in the present method. Examples of alcohols which can be used are ethanol, methanol, isopropanol, butanol or propanol.

The ratio of the catalytic precursor material to alcohol can be about 1 to between about 2 to 50 or 5 to 40. In one example the ratio is about 1 to between about 10 to 30.

In general the hydrolysis does not always require the use of a catalyst. However, using a catalyst can accelerate the proceeding. Thus, in one aspect, the present invention further comprises adding a catalyst to the sol for initiating the reaction between the precursor and the alcohol. Any known acidic catalyst, such as hydrochloric acid or nitric acid, can be used, hi an acid-catalyzed condensation, a catalytic material such as titanium is believed to be protonized which makes the titanium more electrophilic and thus susceptible to nucleophilic attack. In an acid-catalyzed process, the pH value may for instance be in the range of about 1 to about 4, such as for example about pH 1 or 2 or 3 or 4.

The solution comprising the catalyst can be an alcohol as described herein. The alcohol comprising the catalyst can be the same alcohol used for dissolving the catalytic precursor material or a different alcohol. The volume of the solution comprising the catalyst for the formation of the sol can be greater or smaller than the volume of the solution comprising the catalytic precursor material. The volume ratio of solution comprising the catalytic precursor material to the solution comprising the catalyst, such as an acid catalyst, is between about 0.2 to 2.0.

In the present invention, the catalytic precursor material dissolved in an alcohol is mixed, if necessary, with a solution of the same or a different alcohol comprising a catalyst, such as an acid. Subsequently, water, such as ultrapure water, is added for hydrolyzation. The addition of a template, such as a surfactant is not necessary. After addition of the water for hydrolyzation the resulting mixture can be mixed for a time of at least 5 h or 6 h.

Before further treatment the hydrolyzed solution is mixed together with a carbonaceous material. The carbonaceous material can increase adsorption of pollutants referred to herein, in particular hydrophobic and non-polar organic compounds. The carbonaceous material also acts as support material for the doped catalytic material to avoid aggregation of the catalytic particles formed in the sol-gel method. The carbonaceous material or carbonaceous support material as used herein is activated carbon. The raw material for such carbonaceous materials, such as activated carbon, can include, but is not limited to coconut shells, peat, lignite, wood, palm oil shells and sub-bituminous/bituminous coals.

In one embodiment, the carbonaceous material, such as powdered activated carbon (PAC) is pre-treated with a basic solution, preferably a strong basic solution. Strong bases can include, but are not limited to NaOH, KOH, LiOH, RbOH, CsOH, Ca(OH)₂, Sr(OH)₂, or Ba(OH)₂. For example, in one embodiment, the carbonaceous material was pre-treated with 1 M solution of a strong base. Subsequently, the carbonaceous material was dried, such as by vacuum drying before adding it to the hydrolyzed sol.

The carbonaceous material is used in a nanostructured form. Nanostructured materials can have any form and have usually dimensions typically ranging from 1 to 100 nm (where 10 angstrom = 1 nm =1/1000 micrometer). More specific, a nanostructured material has at least one dimension being less than 100 nm. They can be classified into the following dimensional types: zero dimensional (OD) including nanospherical particles (also called nanoparticles or (nano)spheres (such as powdered carbon); one dimensional (ID) including nanorods, nanowires (also called nanofibers) and nanotubes; two dimensional (2D) including nanoflakes, nanodiscs, nanocubes and nanofilms. In one example, powdered activated carbon has been used as carbonaceous nanostructured material.

The carbonaceous material used may comprise either a microporous or mesoporous structure, i.e. the carbonaceous material comprises pores which are micropores or mesopores. According to the definition of the International Union of Pure and Applied Chemistry (IUPAC) the term "mesopore/mesoporous" refers to pore size in the range of 2 to 50 nm. In addition, according to IUPAC, a pore size below 2 nm is termed a micropore (i.e. microporous) range and > 50 nm is termed macropore range.

Carbonaceous materials, such as activated carbon is superior to mineral adsorbents for adsorbing a wide range of organic pollutants, including pharmaceuticals and personal care products (PPCPs), thus possibly creating an interfacial film enriched with the target pollutants that enhances the photodegradation of The intermediates generated during PCD can be adsorbed by the carbonaceous material, then further oxidized, resulting in enhanced mineralization of the organic pollutants. Charge transfer between doped photocatalytic material and carbonaceous material can cause acidification of the surface of the photocatalytic material, which may then have beneficial effects for photocatalytic degradation of certain contaminants due to enhanced interactions between their functional groups and the photocatalytic material. In addition, coating a photocatalytic material on a carbonaceous material may prolong the timescale for the separation of photogenerated e_{cb}⁻/h_{vb}⁺ and thus enhance the quantum yield of the photocatalyst. It is also postulated for the photocatalytic material supported on carbonaceous material, the synthesis procedure using sol-gel method may result in incidental C-doping into the photocatalytic material matrix during calcination process, and this will enable photocatalytic material to exhibit visible-light photoactivity, too. The composite system of photocatalytic material supported on carbonaceous material may prolong the timescale for the separation of the photogenerated e_{cb}⁻/h_{vb}⁺ thus enhancing the quantum efficiency of the photocatalytic material.

The carbonaceous material can be added to the sol in an amount of between about 0.002 to 0.04 g/ml sol. The carbonaceous material can be added to the hydrolyzed sol in an amount so that the carbonaceous material in the resulting composite material is loaded with the doped catalytic material in an amount of between about 10 wt.% to about 50 wt.% or between about 10 wt.% to about 40 wt.%. In one example, the loading rate is about 30 wt.%.

The sol is mixed together with the carbonaceous support material to obtain a slurry suspension for a time period sufficient to ensure uniform distribution of the carbonaceous support material in the sol. In one example, the hydrolyzed sol and the carbonaceous material are mixed for at least 12 hours or for about 24 hours.

After mixing the sol with the carbonaceous support material the sol is condensated to form the gel-coated composite. A gel-coated composite refers to a gel comprising particulate material of a catalytic material and a carbonaceous material. The volume of the forming gel can be reduced by heating. In one example the initial volume is concentrated by about 40 % to 90 %. In one example, the condensation takes place under gradual heating. Gradual heating means that the heating temperature can be increased in increments of 5°C or 10 °C or a temperature between those values to about 80 °C to 90 °C.

The catalytic material of the composite material is doped. Doping of a catalytic material, such as a photocatalytic material results in extending the range of wavelengths of the solar spectrum that can be used to excite the photocatalytic material. For example, the inherent limitation of bare TiO₂ whose *E*_{g} of 3.2 eV suggests that only a small fraction of the solar irradiation (e.g, the UV component which is ca. 5% of solar energy) is able to excite the photocatalyst, a variety of visible-light photoresponsive TiO₂-based photocatalysts have been synthesized. They can be grouped either as: (i) metal-doped TriO₂ (e.g. noble metals, transition metals and/or rare earth metals), (ii) non-metal-doped TriO₂ (e.g. nitrogen, carbon, sulfur and halogens). Metal-doped photocatalytic materials, such as metal-doped TiO₂ nanostructures, generally show poor photocatalytic activity and photostability. Therefore, a non-metal dopant, namely nitrogen, is used for doping the catalytic material referred to herein.

Crystallo-chemical doping with non-metals, such as N, C, S and F is capable of extending the light absorption edge into the visible light region and thus, increase the photocatalytic activity of photocatalytic materials, such as TiO₂. While the catalytic material can be doped with one dopant or with a mixture of different dopants, in the methods of the invention nitrogen is used as the sole dopant. The content ranges of dopant may vary between about 0.1 to 2.0 atomic.% (at.%) or 0.6 to 1.4 at.%. In one example in which N-doped TiO₂ was manufactured, the binding energy of NIs ranges from about 398 to 402 eV, after calibration with Cls peak (284.8 eV).

Doping of the photocatalytic material is achieved in two steps. In this two-step procedure, doping takes place during the sol-gel process (first dopant) and afterwards during calcination under non-oxidizing conditions (second dopant). During the sol-gel method a first dopant comprising precursor material can be added after the sol had been sufficiently hydrolyzed, i.e. before condensation, or it can be added between condensation and calcination. Addition of the first dopant precursor material after sufficient hydrolyzation of the sol may present better doping following less "shielding" effect of the large alkyl groups (e.g. -CH₃).

For the first doping a first dopant comprising precursor material is added. The kind of precursor material used depends on the dopant that one wishes to add to the catalytic material. Addition of carbon as dopant is already achieved by mixing the hydrolyzed sol with a carbonaceous material. Thus, a small amount of carbon as dopant will always be included in the catalytic material of the resulting composite material. Dopant precursor materials for non-metal dopants, i.e. the nitrogen used according to the invention, are known in the art and
are selected from the group consisting of urea, ammonia, ammonium hydroxide, ammonium thiocyanate, hydrazine, and amines. A solution comprising the first dopant precursor material can comprise this precursor material in a concentration between about 1.0 M to 3.0 M or between about 1.5 to 2.5 M or 2 M.

The molar ratio of the precursor material for the catalytic material (e.g. metal alkoxide or organometallic precursor) to the first dopant comprising precursor material may be in the range of 1 to 10 or 1 to 3.9.

The first dopant precursor material and gel-coated composite are mixed for at least 12 h before the gel-coated composite were recovered, such as by centrifugation. Furthermore, the particles obtained can be vacuum dried at ambient temperature, i.e. at a temperature of between about 25 °C to about 32 °C. Any unattached gel can be washed away before calcination.

In general, "calcination" means heating a substance to a high temperature (in general above 300 °C) but below the melting or fusing point, causing not only a loss of possibly remaining liquid (moisture) but also a reduction or oxidation, the decomposition of carbonates and other compounds, or a phase transition of the substance other than melting. In case metals are subjected to calcination, it includes formation of a specific crystal phase of the catalytic material during calcination. To avoid decomposition of the carbonaceous material calcination is carried out in two-stages in the method described herein.

Calcination is carried out for 2 to 6 hours. Calcination can be carried out in furnaces or reactors (sometimes referred to as kilns) of various designs including shaft furnaces, tube furnaces, muffle furnaces, rotary kilns, multiple hearth furnaces, and fluidized bed reactors.

In the method described herein calcination is carried at two different temperatures and under two different atmospheres, as defined in the appended claims. A first calcination is carried out in an oxidizing environment at a temperature which is lower than the temperature used for the second calcination carried out in a non-oxidizing environment. The non-oxidizing environment comprises a second dopant precursor material to increase the dopant loading of the catalytic material. The second dopant precursor material can be the same or can be different from the first dopant precursor material used. The second dopant precursor material is for the same kind of dopant. It is also possible to use for the first and second doping a mixture of different dopants. For the second calcination at higher temperature the second dopant precursor material is comprised in a non- oxidizing environment. The non-oxidizing environment uses an inert gas, i.e. nitrogen or argon, which comprises the second dopant precursor material. The second dopant comprising precursor material can be comprised in the non-oxidizing environment in a mol% in relation to the inert gas forming the bulk of the non-oxidizing environment of at most 50%.

In one embodiment, the flow rate of the gas stream for the non-oxidizing atmosphere can be between about 0.02 to 0.03 L/min. However, the flow rate can be adapted to be higher or lower defending on the experimental conditions.

The initial calcination is carried out at a temperature between 400 °C to <500 °C or 450°C in an oxidizing environment while the following calcination in a non-oxidizing environment is carried out at a temperature between > 500 °C to 700 °C. In one example, temperatures of 500 °C, 600 °C and 700 °C were used. An oxidizing environment refers to an environment or atmosphere comprising oxygen.

A two-stage calcination protocol resulted in improved photonic efficiency for the composite material, with three- fold effect: (1) oxidizing the residual organics present on the surface of (photo)catalyst (such as titania for Ti-organic precursors), (2) preserving the carbonaceous support with minimal ashing at high temperatures (> 500 °C), and (3) ensuring dopant to be doped into photocatalyst at high temperatures (> 500 °C).

The calcination time can be the same for the first and second calcination or can be different. In general, the calcination time can be between 2 to 6 h or 2 to 4 h. The ramp rate for heating during the calcination process is between about 5 °C to 10 °C per minute. The heating rate can be the same or different for the first and second calcination. The ramp rate can also be lower, for example between about 0.1 °C to 5 °C to ensure crystallization of some photocatalytic materials into the most usable crystal form.

The surface area for the composite material of the present invention has been determined using the BET method which is named according to their inventors Brunauer, Emmett, and Teller. In one embodiment, the surface area of the final composite material has been measured to be between about 450 to 650 m²/g.

In one embodiment, the coating of the carbonaceous material with the particulate doped catalytic material can be repeated one or more times. Repeated coating yields composite material with significant distribution of particulate doped catalytic material over the surface of carbonaceous nanostructured material, hence producing enhanced catalytic activity for pollutants removal.

Therefore, in one embodiment, the method described herein further comprises a process of repeated coating. For repeated coating the above described method is carried out to the point where the sol is condensed and a gel-coated composite is obtained, i.e. a gel comprising the carbonaceous material. Afterwards this gel-coated composite material is optionally centrifuged and washed and then dried, such as via vacuum drying. For repeated coating a new process of gel formation is now carried out in the same manner as in the above described method with the only difference that no carbonaceous material is added. That means that at first a hydrolyzed solution comprising a precursor of a catalytic material is mixed together and is then condensed to obtain a gel. In this process no carbonaceous material is added to the hydrolyzed solution so that the resulting gel obtained after condensation only comprises the particulate catalytic material. This gel is mixed or homogenized with a solution of a dopant comprising precursor material. Subsequently, this gel is mixed with the dried gel-coated composite material to obtain a repeatedly coated composite material or 'first time' repeatedly coated composite material. This 'first time' repeatedly coated composite material can now be coated again following the above procedure of preparing a gel without carbonaceous material and mixing it with the dried 'first time' repeatedly coated composite material to obtain a 'second time' repeatedly coated composite material. The repeated coating step can be repeated several times, such as 2 times, 3 times, 4 times or 5 times or even more often. After the last step of repeated coating the obtained repeatedly coated composite material is subjected to the two stage calcination as described above.

For the repeated coating, mixing of the hydrolyzed sol can be shorter than during the method of manufacturing the composite material including the carbonaceous material. Instead of at least 5 or 6 h mixing time can be between about 1.5 to 3.5 h or about 2 h.

After mixing of the gel-coated composite with the gel for repeated coating the mixture can be mixed overnight or for at least 12 h before being dried before calcination or a further repeated coating step. Centrifugation, washing and drying of the gel-coated composite can be carried out as already described herein.

According to the inventive method, the carbonaceous material, i.e. activated carbon, is coated with N-doped TiO₂ particles. As to TiO₂, TiO₂ has three major crystal structures: rutile, anatase and brookite. However, only rutile and anatase play the role in the TiO₂ photocatalysis. Anatase phase is a stable phase of TiO₂ at low temperature (about 400 °C to about 700 °C) and is an important crystalline phase of tiO₂. Rutile is a stable phase of tiO₂ at high temperature (about >700 °C to about 1000 °C). With the method of the present invention including the two stage calcination, TiO₂ is obtained mainly in its anatase form.

Titanium dioxide when used as adsorbent for the removal of contaminants has a high regenerative potential. The spent titanium dioxide can be regenerated via PCO process. The PCO process has been reported as a possible alternative for removing organic matters from potable water. A redox environment will be created in a PCO process to mineralize organic matter and sterilize bacteria adsorbed on the surface of a photocatalytic material comprised in the composite material described herein into carbon dioxide and water when the semiconductor photocatalyst is illuminated by light source in a PCO process. Due to the fact that the catalytic material is doped not only UV light can be used for the regeneration of TiO₂ but also light of other wavelengths.

Photocatalytic degradation (PCD) is a subset of advanced oxidation processes and has several distinct advantages over other types of homogeneous photocatalysis (e.g. UV/H₂O2, UV/ozone, Fenton's system). The benefits of PCD include: (i) preventing the use or production of toxic and hazardous chemicals (e.g. H₂O₂, ozone), (ii) removing a myriad of biorefractory organic pollutants in water, (iii) energy efficient as compared to other treatment processes (e.g. sonolysis and photolysis), and (iv) potential utilization of solar light as the source of excitation energy.

In a further aspect, also described herein is a method of removing pollutants comprised in a liquid stream by subjecting the liquid stream to a composite material described herein. The liquid stream can be a liquid stream of wastewater. The liquid stream can be flowing in a wastewater treatment plant comprising a membrane filtration reactor.

The term "wastewater" refers to "contaminated water" or "raw water" which includes municipal, agricultural, industrial and other kinds of contaminated water. In one example, the contaminated water has a total organic carbon content (TOC) of about 20 mg/1.

Further described herein is a process of cleaning waste water in a membrane filtration reactor, wherein the process comprises:
mixing the composite material of the present invention with wastewater which is to be treated in a membrane reactor;
filtering the mixture treated in the membrane filtration reactor through the filtration membrane of the membrane filtration reactor by applying a suction force at the filtration membrane of the membrane reactor, wherein the diameter of the composite material in the mixture is greater than the diameter of the pores of the membrane, to form a cake layer of composite material on the surface of the filtration membrane; and
continuing feeding the membrane filtration reactor with wastewater until the wastewater is cleaned.

The pollutant removed through catalytic degradation, such as photocatalytic degradation, using the composite material can be a recalcitrant pollutant, such as an organic pollutant. Examples of organic pollutants, include, but are not limited to a pharmaceutical compositions, such as an anti-viral agent, an anti-bacterial agent, an anti-fungal agent, an anticancer drug; a plasticizer, such as bisphenol-A; a hormone, such as a steroide hormone; personal care products; disinfection by-products, such as haloacetic acids (HAAs) and N-nitrosodimethylamine (NDMA); surfactants; perfluorinated chemicals; microcystin toxins and natural organic matter (NOM). NOM refers to organic matter originating from plants and animals present in natural (untreated or raw) waters, for example, in lakes, rivers and reservoirs. NOM can include, but is not limited to cellulose, tannin, cutin, and lignin, along with other various proteins, lipids, and sugars.

In one aspect, disclosed herein is a photocatalytic oxidation reactor using a composite material including a doped photocatalytic material, such as doped TiO₂. Figure 17 illustrates the possible setup of a membrane reactor which uses a composite material of the present invention. A good mixture of composite material with wastewater can be achieved in membrane reactor tank by turbulence flow created, for example, by coarse diffuser located at the bottom of the membrane reactor.

Experiments have shown that the composite material referred to herein, such as a composite material comprising a doped photocatalytic material can be employed for the synergistic adsorption-photocatalytic degradation of a wide range of aqueous organic contaminants. The composite material exhibits photoactivity under visible light (up to 550 nm) and solar light, and high adsorption capacity for recalcitrant organic pollutants.

For example, a composite material consisting of a activated carbon (AC) uniformly coated with a N-doped TiO₂ obtained by a method described herein provides (i) photoactivity in both visible and UV spectral ranges; (ii) good carbon adsorption capacity inherited from its AC, to exhibit synergistic effect of adsorption and PCD for the enhanced removal of refractory organics; (iii) allowing continuous use in the continuous flow reactor systems, in which the composite functions as an adsorbent when light off (or at night) and as an adsorbent-photocatalyst when light on (or in the day time); (iv) allowing on-site self- regeneration of the pollutant-loaded AC through photocatalysis triggered by photoexcitation of the N-doped TiO₂ coating with sun light or artificial light; (v) good dispersity in flowing water and yet can be settled out under gravity in the stagnant water for recovery; (vi) good photostability; (vii) allowing process integration with a membrane filtration system in a hybrid reactor system, e.g., membrane photoreactor; (viii) applicable for water treatment and wastewater reclamation.

Other embodiments are within the following claims and non-limiting examples.

### EXPERIMENTAL SECTION

### Example 1 : Synthesis of N-TiO₂/AC composite

N-TiO₂/AC was synthesized using the sol-gel method. Ultrapure water (18.2 MΩ cm) was used for preparing all aqueous solutions. Powdered AC (Norit SA UF) was purchased from Behn Meyer, Singapore. The powdered AC was first rinsed with ultrapure water, pre-treated in NaOH solution, and finally vacuum-dried. In one examples, with NaOH (1 M) took place for 24 h. After basic treatment powdered AC was vacuum-dried at room temperature (27 °C ± 2 °C).

Titanium tetraisopropoxide (TTIP) (Merck) was used as Ti-precursor, while the nitrogen source was urea (Merck). Absolute ethanol was used as a solvent. In one example, 4 ml TTIP was dissolved in 60 ml of absolute ethanol (denoted as Solution A).

HCl was used to acidify absolute ethanol. In one example 100 mL of absolute ethanol was acidified with 3 mL of HCl (37%) (denoted as Solution B).

Solution B was added dropwise to Solution A under vigorous stirring and the resulting solution was left to mix for 6 h.

Next, urea solution (e.g. mol ratio of TTIP to urea = 1.0 : 3.9) was added dropwise and the resulting solution was left to mix at least 12 h (e.g. overnight).

Subsequently, ultrapure water (e.g. 300 mL or 400 mL) was added for hydrolysis. This was followed by the immersion of pre-treated powdered AC (e.g. 4.0 to 12.0 g) and the slurry suspension was stirred to ensure uniform dispersion (e.g. for about 24 h).

After that, the solution was gradually heated (e.g. to 80 °C ± 5 °C until the volume was reduced to less than 100 ml), and the gel-coated AC precipitates were recovered and vacuum-dried. In one example, the gel-coated AC particles were recovered by centrifugation and then vacuum-dried at room temperature (27 °C. ± 2 °C). The unattached N-doped TiO₂ gels can be washed away with ultrapure water.

For comparison, N-TiO₂ powder was prepared without addition of AC, N-doped TiO₂ was prepared without the incorporation of AC and furthermore TiO₂ powder was prepared without addition of urea and AC. Finally, these vacuum-dried samples were calcined using a tube furnace at 400 °C for 2 h under N₂ gas flow, to yield the N-TiO₂/AC (NTAC), N-TiO₂ and TiO₂, respectively.

Example 2:In another example, the N-TiO₂/AC were calcined using muffle furnace (under air atmosphere) at 400 °C for 2 h. In addition, these N-TiO₂/AC were further calcined in a second calcination step in a tube furnace under the flow of NH₃/N₂. For example, the second calcination step took place under the flow of NH₃/N₂ (50:50 by mol ratio) at 500 °C, 600 °C and 700 °C. The second calcination step was carried out for 2 h to yield different types of N-TiO₂/AC (NTAC) composites.

Example 3: Procedure similar to that of Example 1 and 2, except that other types of titanium alkoxides, such as titanium ethoxide or titanium butoxide are used as Ti precursors. In general, the use of different catalytic metal precursor materials did not significantly influence the performance of the resulting N-TiO₂/AC)(NTAC) composites (results not shown).

Example 4: Procedure similar to that of Example 1 and 2, except that other the powdered AC is pre-treated with potassium hydroxide (KOH). In general, the use of different strong base did not significantly influence the performance of the resulting N-TiO₂/AC (NTAC) composites (results not shown).

Procedure similar to that of Example 1 and 2, except that other the nitrogen precursors are ammonium salts (e.g. ammonium chloride, ammonium nitrate, ammonium sulfate). In general, the use of nitrogen precursor materials did not significantly influence the performance of the resulting N-TiO₂/AC (NTAC) composites (results not shown).

Further examples: As a modification to Example 1 and 2, several protocols were further modified to show a range of possible improvements in synthesizing N-TiO₂/AC composites with different adsorption-photocatalysis bi-functionality performances.

The absolute ethanol solution in Solution B was changed to 40 mL. Solution B was then added to solution A dropwise under vigorous stirring and the left to mix for 1.5 h. 400 mL of ultrapure water was then added to ensure complete hydrolysis and was left mix for 0.5 h. 3.5 g of pre-treated powdered AC was immersed into the resulting solution and the slurry suspension was left to stirred for 24 h.

The slurry suspension was then gradually heated until the temperature reaches 80 °C ± 5°C, and heating was continued until the solution volume was reduced to about 300 mL. The solution was left to cool to room temperature. Subsequently, urea solution (mol ratio of TTIP to urea = 1.0 : 3.9) was added dropwise to the solution and mixing was allowed for 12 h. Next, the samples were centrifuged and the unattached N-doped TiO₂ gels were washed away with ultrapure water. The samples were then dried under vacuum at room temperature (27 °C ± 2 °C) to represent the first-time coated N-TiO₂/AC (NTAC#1).

Two subsequent stages of N-doped TiO₂ coatings were carried out. In general, the titania sol was prepared with the same steps as just described. However, after 400 mL of ultrapure water was added, the solution was then left to mix for 2 h. The titania was then gradually heated until the temperature reached 80 °C. ± 5°C and the heating was continued until the solution volume was reduced to ca. 300 mL. The resulting solution was left to cool and then urea solution (mol ratio of TTIP to urea = 1.0 : 3.9) was added dropwise under magnetic stirring. NTAC#1 particles were added into the solution and then left to mix for 12 h. Next, the samples were centrifuged and the unattached N-doped TiO₂ gels were washed away with ultrapure water. The samples were then vacuum-dried at room temperature (27 °C ± 2 °C) to represent the second-time coated N-TiO₂/AC (NTAC#2).

To obtain third-time coated N-TiO₂/AC composite (NTAC#3), the same repetitive coating procedures was performed on NTAC#2. Eventually, the vacuum-dried samples were calcined using muffle furnace (under air atmosphere) at 400°C for 2 h. In addition, these N-TiO₂/AC composites were also further calcined in a tube furnace under the flow of NH₃/N₂ (50:50 by mol ratio) at 500°C, 600°C and 700°C for 2 h to yield different types of N-TiO₂/AC (NTAC) composites.

### Characterization of N-TiO₂/AC composite

The crystallinity of N-TiO₂/AC N-TiO₂ and TiO₂ was examined using a X-ray diffractometer (Bruker AXS D8 Advance) with Cu Kα radiation of λ =1.54 Å , at the condition of 40 kV and 40 mA. Porosimetric studies were carried out using nitrogen adsorption-desorption at 77 K (QuantaChrome Autosorb-1 Analyzer) to obtain the Brunauer-Emmett-Teller (BET) surface areas (S_{BET}) and Barrett-Joyner-Halenda (BJH) pore size distributions of the materials. The surface chemistry of samples was probed using X-ray photoelectron spectroscopy (XPS) (KratosAXIS Ultra spectrometer), operated with monochromatic Al Kα X-rays (1486.71 eV). Calibration of binding energies for all elements in XPS spectra was made with reference to adventitious carbon (Cls = 284.8 eV). Photoactivity of selected materials was studied with a UV-vis spectrophotometer (Lambda 35, PerkinElmer), equipped with an integrating sphere accessory. The morphology of N-TiO₂/AC and surface N-TiO₂ wt.% were studied using a scanning electron microscope (SEM)-energy dispersive X-ray (EDX) (JSM-6360 microscope with JED-2300 X-ray analyzer). Bulk N-TiO₂ wt.% was determined using gravimetry method, i.e. ashing in a muffle furnace (Nabertherm) at 700 °C for 2 h. The N-TiO₂ crystal perfections and the interfacial titania coatings on AC were probed using the transmission electron microscope (TEM) (JEOL 2010F microscope).

### Analysis of bisphenol-A (BPA)

BPA chemical - BPA was purchased from Merck, and was used without any pretreatment. All BPA solutions were prepared with ultrapure water (18.2 MΩcm).

Adsorption experiment - Kinetic studies on the adsorption of BPA by N-TiO₂/AC and virgin AC were carried out in the dark and it was found that adsorption equilibrium was achieved within 1.5 h (results not shown). Thus, 1.5 h was chosen as the adsorption equilibrium time. Batch equilibrium adsorption experiments were conducted in the dark over a range of initial concentrations to obtain the adsorption isotherm of BPA on N-TiO₂/AC and virgin AC, respectively. The solution pH were measured with a pH meter (Horiba, Japan) and the pH was adjusted using either HCl (1.0 M) or NaOH (1.0 M) solutions. After adsorption equilibrium, the final pH of BPA solutions was measured. Finally, aliquots were sampled and filtered using a 0.45 µm cellulose acetate membrane syringe filter. High-performance liquid chromatography (HPLC) (PerkinElmer) was used to analyze the BPA concentrations. The mobile phase used was ultrapure water/acetonitrile (20:80, v/v), with a flow rate of 1.0 mL/min through a C18 column (Inertsil ODS-3, 4.6 mm i.d. x 150 mm length, 5 µm). The detection wavelength was 225 nm and a temperature of 25 °C was maintained for the column throughout analysis.

### Photocatalytic degradation (PCD) experiment

Prior to all PCD experiments, adsorption of BPA in the dark was performed to allow for adsorption equilibrium. PCD experimental runs were carried out using a solar simulator (Newport, USA), equipped with a Xenon arc lamp of 150 W. The light intensity of the solar spectrum was measured to be about 1000 W/m² (as measured with a digital power meter, EDTM). The UV and visible-light intensity were found to constitute about 6.5% and 40%, respectively, of the light intensity for solar spectrum. The initial concentration of BPA solution used was 36 mg/L and the BPA solution volume was 250 mL. Dosage of N-TiO₂/A used was 0.25 g/L. PCD experiments were conducted without aeration and a quartz cover was placed on top of the glass reactor to minimize loss of water due to evaporation. The passage of electromagnetic waves with specific ranges of wavelengths (i.e. 280-400 nm and 420-630 nm) was controlled using dichroic mirrors. An additional polycarbonate filter was included for the case of visible-light (420-630 nm) experiments in order to reduce the UV to less than 10 µW/cm² (as measured with AccuMAX XRP-3000 radiometer). PCD studies on BPA were also conducted using TiO₂ N-TiO₂ and Degussa P25 (all of which with the comparable photocatalyst loading) at the same excitation wavelengths as that of the experiments with N-TiO₂/AC composite.

### Results

### Characteristics of N-TiO2/AC composite

The physical properties of the 30 wt.% N-TiO₂/AC composite, along with that of various materials, are shown in Table 1.

**Table 1: Physical characteristics for various materials.**

| Samples | S_{BET} (m²/g) | BJH predominant pore size (nm) | BJH cumulative desorption pore volume (cm³/g) | Bulk wt.% of N-TiO₂^{a} | Surface wt.% of N-TiO₂^{b} | At.% of N^{c} | Mass.% of N^{c} |
|---|---|---|---|---|---|---|---|
| Virgin AC | 799 | 1.4 | 0.39 | - | - | - | - |
| P25 | 57.8 | 2.3 | 0.14 | - | - | - | - |
| TiO₂ | 79.6 | 4.0 | 0.11 | - | - | - | - |
| N-TiO₂ | 60.4 | 3.8 | 0.09 | - | - | 0.33 | 0.21 |
| N-TiO₂/AC | 559 | 3.8 | 0.19 | about 30% | about 58% | 0.67 | 0.58 |

| | | | | | | | |
|---|---|---|---|---|---|---|---|
| (-) Not applicable. ^{a} Determined via gravimetry (ashing method). ^{b} Determined via EDX analysis. ^{c} Determined via XPS. | | | | | | | |

The higher surface N-TiO₂ wt.% of N-TiO₂/A composite as compared to its bulk wt.% was because SEM microscope only analyzed the elemental composition on the surface of the composite. The reduction of S_{BET} for N-TiO₂/AC composite as compared to that of virgin AC was attributed to the deposition of N-TiO₂ on AC surface. Coatings of N-TiO₂ on AC were also investigated using EDX and further examinations under the SEM confirmed that the titania was supported with good integrity on the AC surfaces (data not shown).

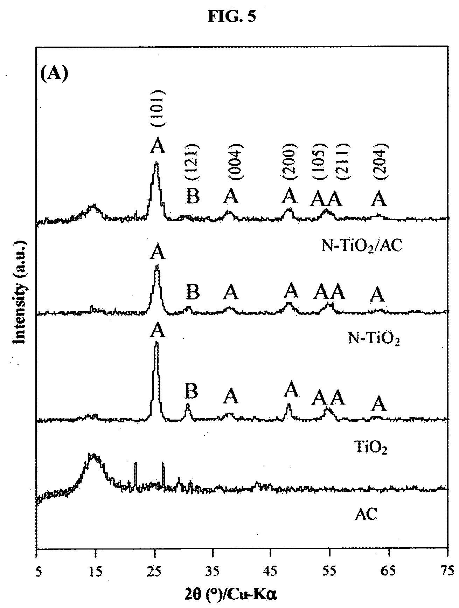

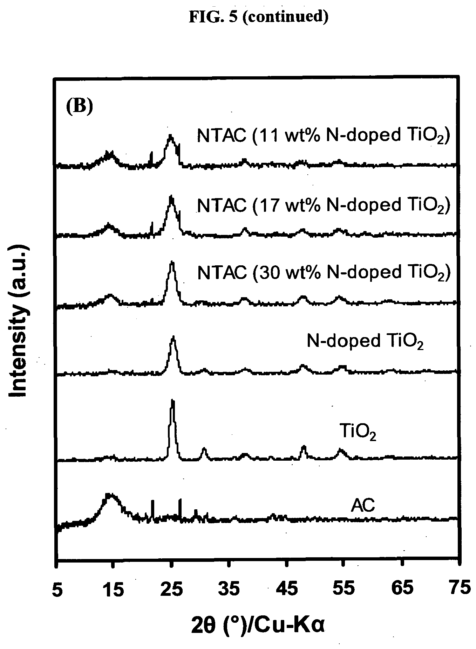

The mineralogical properties of N-TiO₂/AC composite are as shown in the XRD pattern (Figure 5 (A)). From the obtained XRD pattern, the full-width-half-maximum (FWHM) of the main anatase peak (2θ = 25.4°) was determined. The crystal phases of N-TiO₂ and TiO₂ consisted of predominantly anatase. Crystallite sizes were estimated using the Debye-Scherrer's equation. TiO₂ crystals (about 5.7 nm) were relatively larger than N-TiO₂ crystals (about 5.4 nm). This indicates that nitrogen-doping had relatively restricted the growth of the TiO₂ crystals. N-TiO₂ nanocrystals supported on AC (about 5.0 nm) were smaller than unsupported N-TiO₂. This is due to the anti-calcination effect, whereby the production of interfacial energy between the surface of AC and the N-TiO₂ particles prevented the agglomeration of N-TiO₂ on AC.

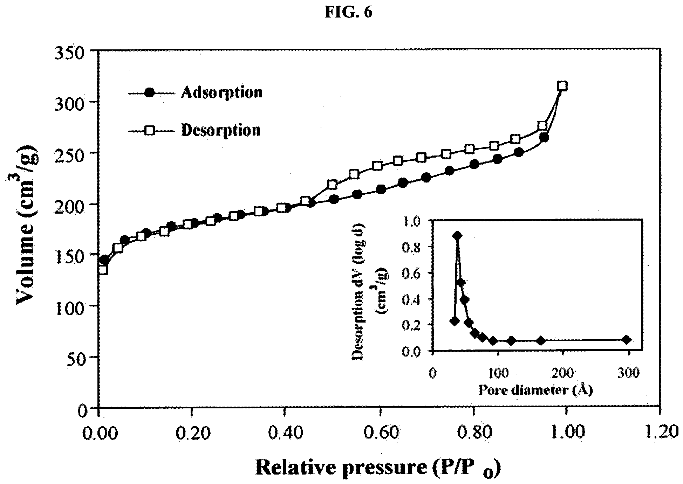

The characteristic of adsorption-desorption phenomenon as shown in Figure 6 indicates that N-TiO₂/AC composite was a porous material. The inset shows that the predominant pore size of N-TiO₂/AC was about 3.8 nm, suggesting that this composite was mainly mesoporous.

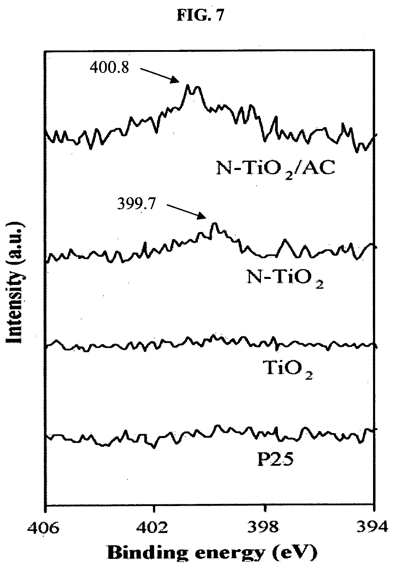

XPS spectra (Figure 7) reveal that the Nls peaks for N-TiO₂ and N-TiO₂/AC occurred at binding energy of about 399.7 eV and 400.8 eV, respectively. This indicates the formation of molecularly chemisorbed γ-N₂ onto the TiO₂ surface (binding energy of 400 eV and 402 eV). In other words, it also means that nitrogen atoms were interstitially doped into the TiO₂ crystal lattices. The higher at.% and mass.% of surficial nitrogen in the N-TiO₂/AC composite (Table 1) as compared to that of N-TiO₂ might be due to the fact that supporting AC adsorbed some of the liberated ammonia during the decomposition of urea, hence resulted in additional incidental nitrogen doping for the composite. When both P25 and TiO₂ were used a reference, XPS verified that there was no detectable Nls peak on these photocatalysts.

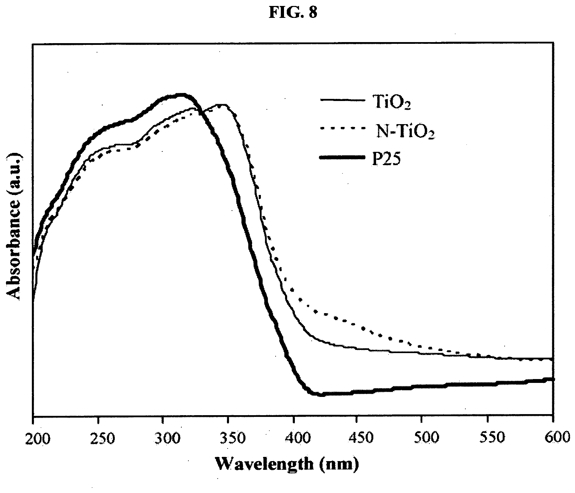

The red-shift phenomenon exhibited by the as-synthesized N-TiO₂ in the visible-light region (about 400-550 nm region) was shown in the UV-vis absorbance spectra (Figure 8). The estimated second absorbance edge for N-TiO₂ was about 2.25 eV (corresponding to light absorbance up to about 550 nm). The fact that TiO₂ did not exhibit significant absorbance in the visible-light spectrum as compared to N-TiO₂ indicated that it was urea (and not other foreign contaminants) which had contributed to the visible-light photoactivity effect of the N-TiO₂. This is in agreement with previous report that nitrogen doping using urea resulted in the lowering *of Eg* of TiO₂ to about 2.3 eV, thus inducing desirable visible light photoactivity properties. The UV-vis absorbance spectrum for N-TiO₂/AC was also analyzed (data not shown) and this black colour composite absorbs the whole spectrum of UV-vis light spectrum.

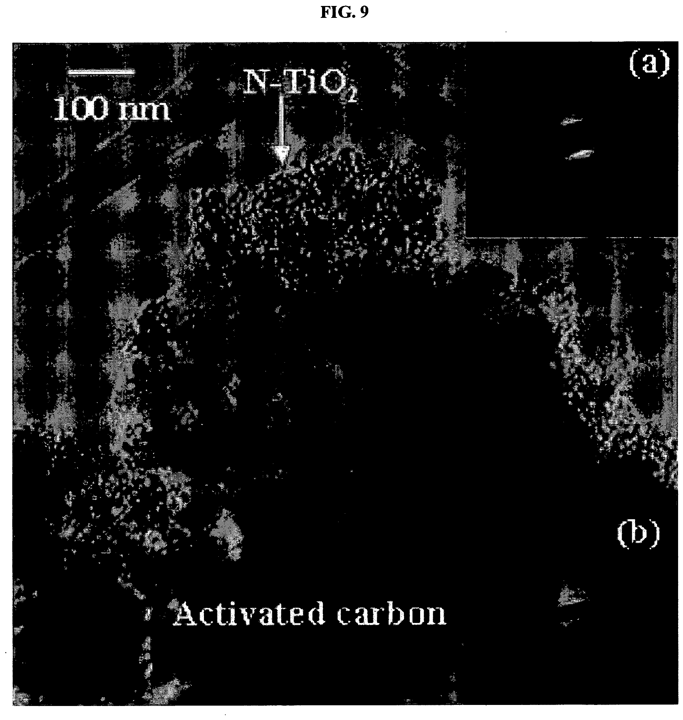

The anchorage of N-TiO₂ particles on the surface of AC is evidenced by TEM image (Figure 9). The contrast in the features of N-TiO₂ crystals and the amorphous carbon could be observed. The insets of Figure 9 (a and b) showed the selected area electron diffraction (SAED) pattern for the N-TiO₂ and AC, respectively. The presence of polycrystalline N-TiO₂ was indicated by the formation of concentric rings. AC did not exhibit this feature since it was predominantly amorphous. Given the non-uniform topology of AC surface, the thickness of the N-TiO₂ deposition was found to be varied. Nevertheless, N-TiO₂ coating of up to about 100 nm thickness was possible.

### Adsorption studies

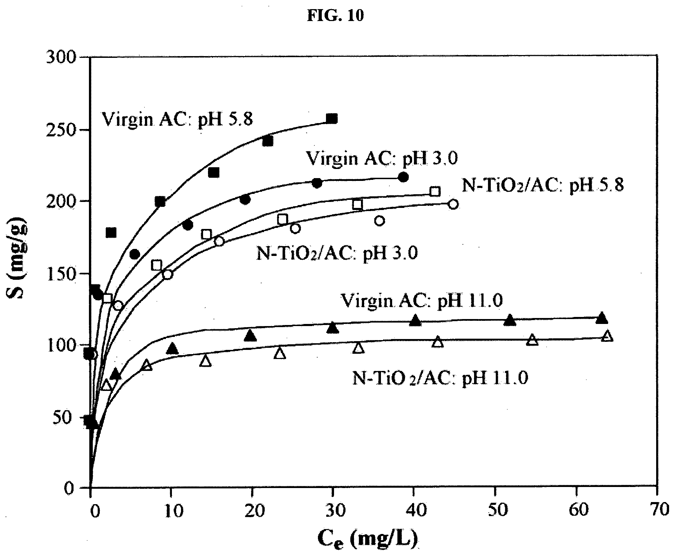

Figure 10 depicts the adsorption isotherm of BPA on N-TiO₂/AC composite and virgin AC under the influence of solution pH. Langmuir adsorption isotherm model was chosen for fitting the isotherm of BPA adsorption by N-TiO₂/AC and virgin AC. The corresponding adsorption parameters, such as maximum sorption capacity and the adsorption constant (*K*_{ads}) are presented in Table 2.

**Table 2: Adsorption parameters derived from the best-fitted Langmuir isotherm model.**

| Samples | pH | *S*ₘₐₓ (mg/g) | *K*_{ads} (L/mg) | *R*² |
|---|---|---|---|---|
| Virgin AC | 3.0 ± 0.2 | 217 | 1.05 | 0.996 |
| | 5.8 ± 0.2 | 252 | 1.13 | 0.992 |
| | 11.0 ± 0.2 | 120 | 0.58 | 0.999 |
| N-TiO₂/AC | 3.0 ± 0.2 | 196 | 0.62 | 0.995 |
| | 5.8 ± 0.2 | 204 | 0.74 | 0.995 |
| | 11.0 ± 0.2 | 106 | 0.54 | 0.998 |

It was found that N-TiO₂/AC exhibited reductions in its adsorption capacity for BPA as compared to virgin AC for all investigated values of pH. This is due to the fact that N-TiO₂/AC possessed considerably lower *S*_{BET} than virgin AC.

Solution pH is an important environmental parameter as it governs the protonation/deprotonation of target compounds in the aqueous phase and the surface functional groups of AC, thus affecting the efficiency of adsorption and PCD. BPA adsorption on N-TiO₂/AC was found to be considerably inhibited at pH 11.0. BPA can deprotonate and formed monoanion (HBPA⁻) and dianion (BPA²⁻) at its p*K*ₐₗ (9.59) and p*K*ₐ₂ (10.2), respectively. Under alkaline condition, the AC surface functional groups would be negatively charged (AC-O⁻). It is known that the pH_{pzc} (point of zero charge) for the TiO₂ is in the range of pH 5-7; i.e. a net positive and negative charge occurs on TiO₂ surface when pH < pH_{pzc} and pH > pH_{pzc}, respectively. For the case of N-TiO₂, the pH_{pzc} has been reported to shift to a slightly higher value (about 1.0 unit pH only) as compared to the case of TiO₂. It is therefore postulated that BPA anions are considerably repelled by the predominant negatively charged functional groups present on the surface of N-TiO₂/AC at pH 11.0. In contrast, a relatively greater adsorption of BPA was exhibited by the composite at pH 3.0. Under acidic condition, positively charged surface functional groups formed on both AC (AC-OH₂⁺) and N-TiO₂ (=Ti-OH₂⁺) will tend to have less electrostatic repulsion with the molecular form of BPA.

### Photocatalytic degradation experiment (PCD) studies

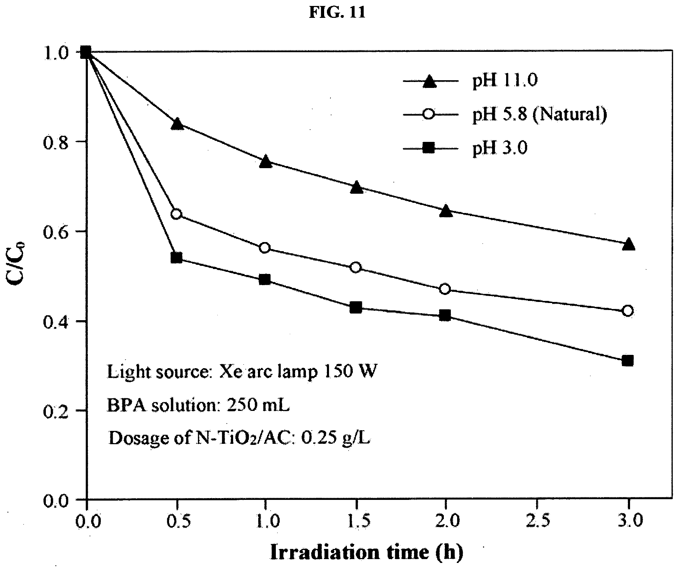

Effect of solution pH - At the end of 3 h of PCD experiment, the efficiency of PCD was found to generally decrease with increasing levels of pH (Figure 11). The least bisphenol-A (BPA) photodegradation at pH 11.0 was ascribed to the net electrostatic repulsion. Nevertheless, PCD of BPA at pH > p*K*ₐ₂ still occurred because of the increasing OH⁻ ion concentrations in the solution. Reaction of OII⁻ with the photogenerated holes would produce hydroxyl radicals ('OH) to photocatalytically degrade BPA. The relatively improved BPA photodegradation in the acidic regime may be attributed to the positively charged surface groups on TiO₂ (=Ti-OH₂⁺).

It has been reported that surface protonation of TiO₂ in acidic solutions could lead to the production of photocurrent. Thus, charge carriers separation could be relatively more favorable at acidic pH than at circumneutral and alkaline pH. Since the experiments did not involve aeration, thus it may be possible that the protonated surfaces of N-TiO₂ had compensated the role of dissolved oxygen as electron scavengers in the photocatalytic reaction system.

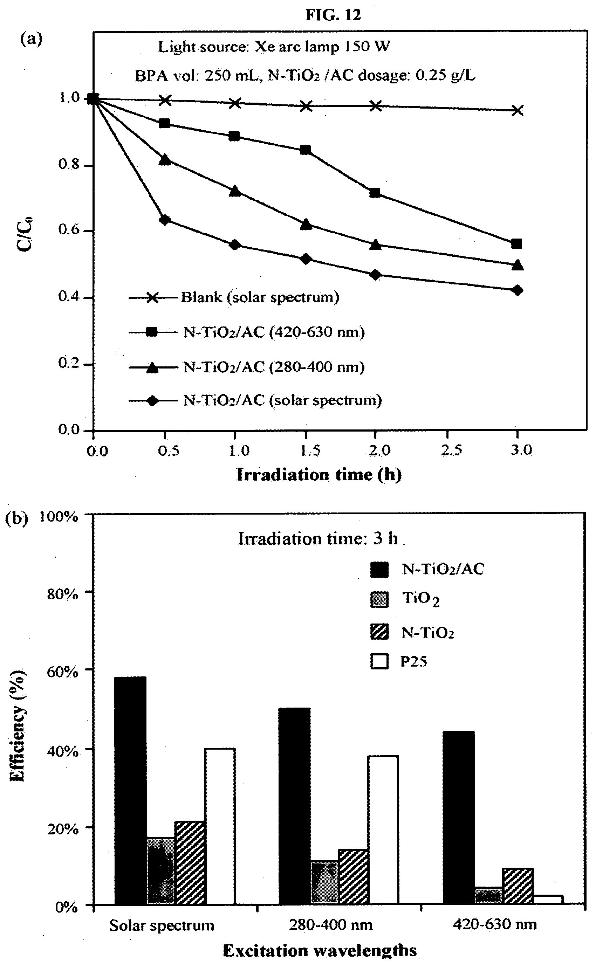

Effect of excitation wavelengths - The influence of excitation wavelengths on the photodegradation of BPA employing N-TiO₂/AC is presented in Figure 12(a). After 3 h of solar irradiation, the blank experiment resulted in less than 4 % of BPA removal through photolysis effect. It is postulated that the effect of photolysis would be further reduced in the presence of N-TiO₂/AC particles because of the significant light attenuation in the turbid solution. N-TiO₂/AC composite was found to be photoactive under both UV and visible-light illumination. Apparently, interstitial nitrogen doping for TiO₂ could result in desirable PCD effect. This demonstration of visible-light photoresponsiveness of N-TiO₂/AC is particularly encouraging as it indicates the potential of harnessing the visible-light energy from the solar irradiation, and possibly too, interior lightings. Given that nitrogen doping may result in visible-light absorbance up until about 550 nm (Figure 8), further red-shift for the second absorbance edge onset may significantly improve PCD performance under visible-light irradiation.

The comparison of PCD efficiency achieved by N-TiO₂/AC with that of other photocatalysts is presented in Figure 12(b). It was found that N-TiO₂/AC had relatively higher photodegradation efficiency for BPA after 3 h of experiment as compared with TiO₂ N-TiO₂ and P25. For the case of P25, its favorable PCD effect for solar and UV (280-400 nm) could partly be due to the presence of predominantly anatase-rutile mixture. However, in the visible-light range (420-630 nm), P25 displayed negligible removal of BPA. N-TiO₂ consistently exhibited greater BPA photodegradation efficiency than TiO₂ for all ranges of the investigated excitation wavelengths. In particular, N-TiO₂ exhibited more than two-fold PCD efficiency as compared to TiO₂ under visible-light illumination. This result is in agreement with the UV-vis absorbance results (Figure 8). Indeed, synergistic effect of adsorption-photocatalysis exhibited by the dual-functional N-TiO₂/AC had resulted in greater BPA photodegradation, which otherwise was not achieved by the photocatalysts without AC support.

## Claims

1. A sol-gel method for preparing a composite material of activated carbon comprising TiO₂ doped with nitrogen as a photocatalytic material, the method comprising:
mixing a hydrolyzed solution comprising a titanium alkoxide with the activated carbon to obtain a sol;
incubating the sol under mixing;
condensating the sol by heating to obtain a gel-coated composite;
subjecting the gel-coated composite to a first calcination carried out at a temperature between 400 °C to ≤ 500 °C for between 2 hours to 6 hours in an oxidizing environment, wherein the oxidizing environment is an oxygen comprising environment; and
subjecting the calcined gel-coated composite to a second calcination carried out at a temperature between > 500 °C to 700 °C for between 2 hours to 6 hours in a non-oxidizing environment, wherein the non-oxidizing environment comprises a second dopant comprising precursor material, and wherein the non-oxidizing environment is a nitrogen atmosphere or argon atmosphere;
wherein a solution of a first dopant comprising precursor material is added to the solution comprising the titanium alkoxide (1) before hydrolyzation, or a first dopant comprising precursor material is added to the sol (2) after hydrolyzation and before condensation or to the gel-coated composite (3) between condensation and subjecting the gel-coated composite to calcination,
wherein the first and second dopant are nitrogen and the first and second dopant comprising precursor materials are selected from the group consisting of NH₃, urea, NH₄OH, ammonium thiocyanate, hydrazine and amines.

2. The method of claim 1, further comprising a process of repeated coating, wherein the process comprises:
a) mixing a hydrolyzed solution comprising a titanium alkoxide and condensating it by heating to obtain a gel;
b) adding a solution of the dopant comprising precursor material to the gel;
c) drying the gel-coated composite obtained directly after condensation but before calcination;
d) mixing the gel obtained in b) with the dried gel-coated composite of c) to obtain a repeatedly coated composite material;
e) drying the repeatedly coated composite material;
f) subjecting the repeatedly coated composite material to a first calcination carried out at a temperature between 400 °C to ≤ 500 °C for between 2 hours to 6 hours in an oxidizing environment, wherein the oxidizing environment is an oxygen comprising environment; and
g) subjecting the calcined repeatedly coated composite material to a second calcination carried out at a temperature between > 500 °C to 700 °C for between 2 hours to 6 hours in a non-oxidizing environment, wherein the non-oxidizing environment is a nitrogen atmosphere or argon atmosphere.

3. The method of claim 2, wherein the process of repeated coating is carried out at least once using the dried repeatedly coated activated carbon obtained in a previous round under e) for mixing with the gel referred to under d) of claim 2.

4. The method of any one of claims 1 to 3, wherein the sol is gradually heated for condensation.

5. The method of any one of claims 1 to 4, wherein the second dopant comprising precursor material is comprised in the nitrogen atmosphere or argon atmosphere in a mol% in relation to the nitrogen or argon gas of at most 50%.

6. The method of any one of claims 1 to 5, wherein
(1) the activated carbon is pre-treated with a basic solution;
(2) the titanium alkoxide is dissolved in an alcohol;
(3) calcination is carried out for 2 to 4 hours;
(4) the first and second calcination are carried out independently of each other at a ramping rate of 5°C to 10°C per minute; and/or
(5) mixing the sol is carried out for a time period of between 12 to 24 hours.

7. The method of any one of claims 1 to 6, wherein the activated carbon is loaded with the doped TiO₂ in an amount of between 10 wt.% to 50 wt.%.

8. The method of any one of claims 1 to 7, wherein the molar ratio of the titanium alkoxide to first dopant comprising precursor material is in the range of 1 : 10.

9. The method of any one of claims 1 to 8, wherein the titanium alkoxide is selected from the group consisting of titanium methoxide, titanium ethoxide, titanium tetraisopropoxide, and titanium butoxide.

## Patentansprüche

1. Ein Sol-Gel-Verfahren zur Herstellung eines Verbundmaterials aus Aktivkohle, umfassend mit Stickstoff dotiertes TiO₂ als ein photokatalytisches Material, wobei das Verfahren umfasst:
Mischen einer hydrolisierten Lösung, umfassend ein Titanalkoxid, mit der Aktivkohle, um ein Sol zu erhalten;
Inkubieren des Sols unter Mischen;
Kondensieren des Sols durch Erwärmen, um ein Gel-beschichtetes Komposit zu erhalten;
Unterziehen des Gel-beschichteten Komposits einer ersten Kalzinierung, die bei einer Temperatur zwischen 400 °C bis ≤ 500 °C für 2 Stunden bis 6 Stunden in einer oxidierenden Umgebung durchgeführt wird, wobei die oxidierende Umgebung eine Sauerstoff enthaltende Umgebung ist; und
Unterziehen des kalzinierten Gel-beschichteten Komposits einer zweiten Kalzinierung, die bei einer Temperatur zwischen > 500 °C bis 700 °C für 2 Stunden bis 6 Stunden in einer nicht oxidierenden Umgebung durchgeführt wird, wobei die nicht oxidierende Umgebung ein zweites Dotiermittel umfasst, umfassend eine Vorläufersubstanz und wobei die nicht oxidierende Umgebung eine Stickstoffatmosphäre oder eine Argonatmosphäre ist;
wobei eine Lösung eines ersten Dotiermittels, umfassend eine Vorläufersubstanz, zu der Lösung, welche das Titanalkoxid umfasst, (1) vor Hydrolysierung gegeben wird, oder ein erstes Dotiermittel, umfassend eine Vorläufersubstanz, zu dem Sol (2) nach Hydrolysierung und vor Kondensierung gegeben wird, oder zu dem Gel-beschichteten Komposit (3) zwischen Kondensierung und dem Unterziehen des Gel-beschichteten Komposits der Kalzinierung gegeben wird,
wobei das erste und das zweite Dotiermittel Stickstoff sind und das erste und zweite Dotiermittel Vorläufersubstanzen umfassen, ausgewählt aus der Gruppe bestehend aus NH₃, Harnstoff, NH₄OH, Ammoniumthiocyanat, Hydrazin und Aminen.

2. Das Verfahren gemäß Anspruch 1, ferner umfassend ein Verfahren des wiederholten Beschichtens, wobei das Verfahren umfasst:
a) Mischen einer hydrolisierten Lösung, umfassend ein Titanalkoxid, und Kondensieren der Lösung durch Erwärmen, um ein Gel zu erhalten;
b) Zugeben einer Lösung des Dotiermittels, umfassend eine Vorläufersubstanz, zum Gel;
c) Trocknen des Gel beschichteten Komposits, das direkt nach der Kondensation, jedoch vor der Kalzinierung erhalten wurde;
d) Mischen des in b) erhaltenen Gels mit dem getrockneten, Gel-beschichteten Komposits aus c), um ein wiederholt beschichtetes Kompositmaterial zu erhalten;
e) Trocknen des wiederholt beschichteten Kompositmaterials;
f) Unterziehen des wiederholt beschichteten Kompositmaterials einer ersten Kalzinierung, die bei einer Temperatur zwischen 400 °C bis ≤ 500 °C für 2 Stunden bis 6 Stunden in einer oxidierenden Umgebung durchgeführt wird, wobei die oxidierende Umgebung eine Sauerstoff enthaltende Umgebung ist; und
g) Unterziehen des kalzinierten, wiederholt beschichteten Kompositmaterials einer zweiten Kalzinierung, die bei einer Temperatur zwischen > 500 °C bis 700 °C für 2 Stunden bis 6 Stunden in einer nicht oxidierenden Umgebung durchgeführt wird, wobei die nicht oxidierende Umgebung eine Stickstoffatmosphäre oder eine Argonatmosphäre ist.

3. Das Verfahren gemäß Anspruch 2, wobei das Verfahren des wiederholten Beschichtens mindestens einmal, unter Verwenden der getrockneten, wiederholt beschichteten Aktivkohle durchgeführt wird, welche in einer vorherigen Runde unter e) erhalten wird, zum Mischen dem Gel gemäß d) in Anspruch 2.

4. Das Verfahren gemäß einem der Ansprüche 1 bis 3, wobei das Sol bei der Kondensation graduell erwärmt wird.

5. Das Verfahren gemäß einem der Ansprüche 1 bis 4, wobei das zweite Dotiermittel eine Vorläufersubstanz umfasst, welche in der Stickstoffatmosphäre oder Argonatmosphäre in einem Mol-%-Verhältnis in Bezug auf das Stickstoff- oder Argongas von höchstens 50 % umfasst ist.

6. Das Verfahren gemäß einem der Ansprüche 1 bis 5, wobei
(1) die Aktivkohle mit einer basischen Lösung vorbehandelt wird;
(2) das Titanalkoxid in einem Alkohol gelöst wird;
(3) die Kalzinierung über 2 bis 4 Stunden durchgeführt wird;
(4) die erste und zweite Kalzinierung unabhängig voneinander bei einer Stufenrate von 5°C bis 10 °C pro Minute durchgeführt wird; und/oder
(5) das Mischen des Sols über eine Dauer von 12 bis 24 Stunden durchgeführt wird.

7. Das Verfahren gemäß einem der Ansprüche 1 bis 6, wobei die Aktivkohle mit dem dotierten TiO₂ in einer Menge von 10 Gew.-% bis 50 Gew.-% beschickt ist.

8. Das Verfahren gemäß einem der Ansprüche 1 bis 7, wobei das Molverhältnis des Titanalkoxids zu dem ersten Dotiermittel, umfassend eine Vorläufersubstanz, im Bereich von 1 : 10 liegt.

9. Das Verfahren gemäß einem der Ansprüche 1 bis 8, wobei das Titanalkoxid ausgewählt ist aus der Gruppe bestehend aus Titantetramethanolat, Titantetraethanolat, Tetraisopropyltitanat und Titantetrabutanolat.

## Revendications

1. Procédé sol-gel pour préparer un matériau composite de charbon actif comprenant du TiO₂ dopé à l'azote en tant que matériau photocatalytique, le procédé comprenant :
le mélange d'une solution hydrolysée comprenant un alcoxyde de titane avec le charbon actif pour obtenir un sol ;
l'incubation du sol en mélangeant ;
la condensation du sol en chauffant pour obtenir un composite revêtu de gel,
l'exposition du composite revêtu de gel à une première calcination réalisée à une température entre 400 °C et ≤ 500 °C pendant une durée entre 2 heures et 6 heures dans un environnement oxydant, dans lequel l'environnement oxydant est un environnement comprenant de l'oxygène ; et
l'exposition du composite revêtu de gel calciné à une seconde calcination réalisée à une température entre > 500 °C et 700 °C pendant une durée entre 2 heures et 6 heures dans un environnement non oxydant, dans lequel l'environnement non oxydant comprend un matériau précurseur comprenant un second dopant, et dans lequel l'environnement non oxydant est une atmosphère d'azote ou une atmosphère d'argon ;
dans lequel une solution d'un matériau précurseur comprenant un premier dopant est ajoutée à la solution comprenant l'alcoxyde de titane (1) avant l'hydrolyse, ou un matériau précurseur comprenant un premier dopant est ajouté au sol (2) après l'hydrolyse et avant la condensation ou au composite revêtu de gel (3) entre la condensation et l'exposition du composite revêtu de gel à une calcination,
dans lequel le premier et le second dopant sont de l'azote et les matériaux précurseurs comprenant un premier et un second dopant sont choisis dans le groupe constitué du NH₃, de l'urée, du NH₄OH, du thiocyanate d'ammonium, de l'hydrazine et des amines.

2. Procédé selon la revendication 1, comprenant en outre un procédé de revêtement répété, dans lequel le processus comprend :
a) le mélange d'une solution hydrolysée comprenant un alcoxyde de titane et sa condensation en chauffant pour obtenir un gel ;
b) l'ajout d'une solution au matériau précurseur comprenant un dopant au gel
c) le séchage du composite revêtu de gel obtenu directement après la condensation mais avant la calcination ;
d) le mélange du gel obtenu en b) avec le composite revêtu de gel séché de c) pour obtenir un matériau composite revêtu de manière répétée ;
e) le séchage du matériau composite revêtu de manière répétée ;
f) l'exposition du matériau composite revêtu de manière répétée à une première calcination réalisée à une température entre 400 °C et ≤ 500 °C pendant une durée entre 2 heures et 6 heures dans un environnement oxydant, dans lequel l'environnement oxydant est un environnement comprenant de l'oxygéne ; et
g) l'exposition du matériau composite revêtu de manière répétée calciné à une seconde calcination réalisée à une température entre > 500 °C et 700 °C pendant une durée entre 2 heures et 6 heures dans un environnement non oxydant, dans lequel l'environnement non oxydant est une atmosphère d'azote ou une atmosphère d'argon.

3. Procédé selon la revendication 2, dans lequel le processus de revêtement répété est réalisé au moins une fois à l'aide du charbon actif revêtu de manière répétée séché obtenu dans un cycle précédent en e) en vue du mélange avec le gel désigné en d) de la revendication 2.

4. Procédé selon l'une quelconque des revendications 1 à 3, dans lequel le sol est progressivement chauffé en vue de sa condensation.

5. Procédé selon l'une quelconque des revendications 1 à 4, dans lequel le matériau précurseur comprenant un second dopant est contenu dans l'atmosphère d'azote ou l'atmosphère d'argon en un % en mol par rapport au gaz d'azote ou d'argon d'au plus 50%.

6. Procédé selon l'une quelconque des revendications 1 à 5, dans lequel
(1) le charbon actif est prétraité avec une solution basique ;
(2) l'alcoxyde de titane est dissous dans un alcool,
(3) la calcination est réalisée pendant 2 à 4 heures ;
(4) la première et la seconde calcination sont réalisées indépendamment l'une de l'autre à un vitesse d'augmentation de la température de 5 °C à 10 °C par minute ; et/ou
(5) le mélange du sol est réalisé pendant une durée entre 12 et 24 heures.

7. Procédé selon l'une quelconque des revendications 1 à 6, dans lequel le charbon actif est chargé avec le TiO₂ dopé en une quantité située entre 10 % en poids et 50 % en poids.

8. Procédé selon l'une quelconque des revendications 1 à 7, dans lequel le rapport molaire de l'alcoxyde de titane au matériau précurseur comprenant un premier dopant se situe dans la plage de 1/10.

9. Procédé selon l'une quelconque des revendications 1 à 8, dans lequel l'alcoxyde de titane est choisi dans le groupe constitué du méthoxyde de titane, de l'éthoxyde de titane, du tétraisopropoxyde de titane et du butoxyde de titane.
